# EUROPÄISCHE PATENTSCHRIFT

(11) **EP 2 358 986 B1**
(45) Veröffentlichungstag und Bekanntmachung des Hinweises auf die Patenterteilung: **25.01.2017**
(21) Anmeldenummer: 09760492.0
(22) Anmeldetag: 24.11.2009
(51) Int. Cl.: F02D 41/30, F02B 1/12, F02P 23/04

(54) **VERBRENNUNGSKRAFTMASCHINE UND VERFAHREN ZUR KOMPRESSIONSZÜNDVERBRENNUNG**
INTERNAL COMBUSTION ENGINE AND METHOD FOR COMPRESSION IGNITION COMBUSTION
MOTEUR À COMBUSTION INTERNE ET PROCÉDÉ POUR LA COMBUSTION À ALLUMAGE PAR COMPRESSION

(30) Priorität: 11.12.2008 DE 102008061769
(43) Veröffentlichungstag der Anmeldung: 24.08.2011
(73) Patentinhaber: Bayerische Motoren Werke Aktiengesellschaft, 80809 München (DE)
(72) Erfinder: SCHENK, Martin, 83024 Rosenheim (DE); GÜNTHNER, Michael, 80939 München (DE)
(86) Internationale Anmeldenummer: PCT/EP2009/008339
(87) Internationale Veröffentlichungsnummer: WO 2010/066336

(56) Entgegenhaltungen:
- WO-A2-2009/016310
- US-A1- 2004 129 241
- US-A1- 2007 266 979
- US-B2- 6 986 342

## Beschreibung

Die Erfindung bezieht sich auf eine Verbrennungskraftmaschine, insbesondere auf eine Otto-Brennkraftmaschine, die zumindest bei bestimmten Betriebsbedingungen in einem Kompressionszündverbrennungsmodus betreibbar ist, gemäß dem Oberbegriff des Anspruchs 1, sowie auf ein Verfahren zur Steuerung einer entsprechend ausgebildeten Verbrennungskraftmaschine gemäß dem Oberbegriff des Anspruchs 9.

Derzeit gibt es viele Bestrebungen zur Reduzierung des Kraftstoffverbrauchs bei Teillast bei gleichzeitiger Beibehaltung extrem niedriger Schadstoffemissionen. Entdrosselte ottomotorische Schichtbrennverfahren zeigen dabei ein großes Potential hinsichtlich der Verbrauchsreduzierung. Dabei wird im Schichtbrennverfahren bzw. Magerbetrieb die Kraftstoffeinspritzung in den Zylinder erst kurz vor dem Zündzeitpunkt vorgenommen, so dass sich zum Zeitpunkt der Zündung trotz einer sehr geringen Menge an eingespritztem Kraftstoff ein zündfähiges Verbrennungsgemisch um die Zündkerze bildet. Die mittels Zündkerze erzeugte Flammenfront breitet sich von dort in den gesamten Brennraum aus. Die Umsetzungsgeschwindigkeit ist somit von der Flammengeschwindigkeit abhängig. Die Problematik dieser geschichteten Magerkonzepte ist jedoch darin zu sehen, dass zur Stickoxidreduzierung eine aufwendige Abgasnachbehandlung notwendig ist.

Eine Umgehung oben genannter Problematik ist durch ein sog. Kompressionszündverbrennungsverfahren - auch HCCI-Brennverfahren (Homogenous Charge Compression Ignition) genannt - möglich, welches bei bestimmten Betriebsbedingungen der Brennkraftmaschine zum Einsatz kommen kann. Beim HCCI-Brennverfahren erfolgt während des Kompressionszündverbrennungsmodus der Brennkraftmaschine die Zündung nicht - wie bei herkömmlichen Verfahren - punktförmig an der Zündkerze, sondern im gesamten Brennraum fast gleichzeitig durch eine Selbstentzündung des Verbrennungsgemisches, da die Zylinderfüllung während der Verdichtung bzw. des Prozessverlaufes Selbstentzündungsbedingungen erreicht und sich somit selbst entzündet. Die Verbrennung wird also nicht durch eine punktförmige Fremdzündquelle initiiert, sondern allein durch die Zündbedingungen im Brennraum bestimmt. Die dafür notwendigen Zündbedingungen werden z. B. durch die Rückführung von heißem Restgas, durch eine Vorheizung der Ansaugluft oder durch eine Erhöhung der Verdichtung sichergestellt. Dieses Brennverfahren weist zum einen ein hohes Verbrauchspotential auf, und zum anderen wird in großen Betriebsbereichen die NOx-Rohemission so weit abgesenkt, dass ein Magerbetrieb auch ohne aufwendige Abgasnachbehandlung möglich wird.

Ein Problem bei oben genanntem Brennverfahren ergibt sich jedoch dadurch, dass die Verbrennung während des Kompressionszündverbrennungsmodus im Gegensatz zur fremdgezündeten Verbrennung, bei der der Zündzeitpunkt als dominanter Kontrollparameter fungiert, nicht mittels eines singulär applikativen Parameters kontrollierbar ist. Aufgrund der sich relativ langsam ausdehnenden Verbrennungsfront bei einer Zündung des Verbrennungsgemisches mittels einer herkömmlichen Zündkerze ist der Ablauf des HCCI-Brennverfahrens mittels solcher Zündsysteme nur marginal beeinflussbar, d.h. solche Zündsysteme sind nicht im gesamten Betriebsbereich dieses Brennverfahrens zur Brennverlaufssteuerung geeignet.

Aus der US 2007/0266979 A1 ist bereits eine Verbrennungskraftmaschine bekannt, die in einem Kompressionszündverbrennungsmodus betreibbar ist. Weiter ist eine Corona-Entladungsvorrichtung vorgesehen ist, die das Verbrennungsgemisch derart aufbereitet, dass die Selbstentzündung des Verbrennungsgemisches und somit der Betrieb der Verbrennungskraftmaschine im Kompressionszündverbrennungsmodus vergrößert werden kann.

Aus der US 6,986,342 B2 ist bereits eine Vorrichtung und ein Verfahren zur Steuerung eines Kompressionszündverbrennungsmodus bekannt, bei dem mittels einer Corona-Entladungsvorrichtung, die entweder im Ansaugkanal des Zylinders oder Verbrennungsraum des Zylinders angeordnet sein kann, eine Ionisierung des Verbrennungsgemisches vorgenommen werden kann. Durch den Grad der Ionisierung lässt sich der Verbrennungszeitpunkt beeinflussen. Weiter ist eine Triggereinheit offenbart, die ein Auslösen der Selbsteinzündung ermöglicht.

Aufgabe der Erfindung ist es, eine Verbrennungskraftmaschine und ein entsprechendes Verfahren anzugeben, bei dem eine kontrollierte und schnelle Zündung im Kompressionszündverbrennungsmodus erreicht werden kann.

Diese Aufgabe wird durch eine Verbrennungskraftmaschine nach Patentanspruch 1, sowie durch ein Verfahren nach Anspruch 9 gelöst. Vorteilhafte Weiterbildungen ergeben sich aus den abhängigen Ansprüchen.

Die Erfindung geht von einer Verbrennungskraftmaschine, insbesondere von einer direkteinspritzenden (Otto)-Verbrennungskraftmaschine ggf. mit einer Aufladeeinrichtung aus, die zumindest bei bestimmten Betriebsbedingungen in einem Kompressionszündverbrennungsmodus betreibbar ist. Dabei erreicht - wie bereits eingangs beschrieben - das im Brennraum vorliegende bzw. gebildete Verbrennungsgemisch durch die Verdichtung, sowie die ablaufenden chemischen Prozesse, Selbstzündbedingungen, so dass entweder zeitgleich oder typischerweise in schneller zeitlicher Abfolge im gesamten Brennraum der chemische Umsatz einsetzt.

Um das Verbrennungsgemisch außerhalb des Kompressionszündverbrennungsmodus aktiv entzünden zu können, muss bei Otto-Brennkraftmaschinen ein Zündsystem vorgesehen sein, welches in Abhängigkeit vom gewünschten Zündzeitpunkt die Umsetzung des Verbrennungsgemisches auslöst. Gemäß dem Stand der Technik werden dazu herkömmliche Zündkerzen verwendet, welche einen Zündfunken erzeugen, der das Verbrennungsgemisch in direkter Nachbarschaft zum Funken entzündet. In Abhängigkeit von der Geschwindigkeit der Flammenfrontausbreitung wird das Verbrennungsgemisch sukzessiv im gesamten Brennraum entzündet.

Der Erfindung liegt die Erkenntnis zugrunde, dass neben den herkömmlichen Zündkerzen-Zündsystemen bereits sog. Corona-Zündsysteme bekannt sind. Bei Corona Zündsystemen wird z.B. über eine Tesla-Spule, die über eine Hochfrequenz-Wechselspannung in Resonanz versetzt wird, an einer Elektrodenspitze im Brennraum eine sehr hohe Spannung in Verbindung mit einer stark inhomogenen elektrischen Feldverteilung erzeugt. Hierdurch wird lokal das elektrische Feld ausreichend hoch, um im Brennraum einen unvollständigen Funkendurchbruch (Corona) zu erzeugen, in welchem Elektronen aus den Atom- bzw. Molekülrümpfen herausgerissen oder -gestoßen werden. Hierdurch wird kein vollständiger, leitfähiger Ionenkanal von der Hochfrequenz-/-Hochspannungselektrode bis auf die Masse erzeugt. Je nach Frequenz der Anregung erfolgt nur eine geringe Erwärmung des erzeugten, sogenannten nicht-thermischen Corona-Plasmas. Es bilden sich Radikale, durch die eine chemische Kettenreaktion im Brennraum in Gang gebracht wird.

Um bei Verbrennungskraftmaschinen, die zumindest bei bestimmten Betriebsbedingungen in einem Kompressionszündverbrennungsmodus betreibbar sind, eine kontrollierte Zündung im Kompressionszündverbrennungsmodus zu erreichen, wird vorgeschlagen, dass ein Corona-Zündsystem als Triggereinheit zum Auslösen bzw. Aktivieren dieser Selbstentzündung vor Erreichen der Selbstzündungsbedingungen verwendet wird. Durch die erzeugte Corona-Entladung findet eine zeitlich gezielte Initialisierung der räumlichen Selbstentzündung statt, indem sich entlang der Coronafäden Radikale bilden, wodurch lokal die Reaktivität des Verbrennungsgemisches erhöht wird. Dadurch wird eine sehr schnelle Entflammung entlang der Coronafäden initialisiert und somit die Selbstentzündung (z. B. durch druckinduzierte Temperaturerhöhung und Radikalkettenexplosion) in den restlichen Bereichen des Brennraums ausgelöst.

Um unnötige Kosten und Bauraum zu sparen, kann dieses Corona-Zündsystem insbesondere bei Otto-Brennkraftmaschinen erfindungsgemäß weiter derart ausgebildet und angeordnet sein, dass es auch zum (Fremd-) Entzünden des Verbrennungsgemisches insbesondere durch Erzeugen eines sogenannten nicht-thermischen Plasmas außerhalb des Kompressionszündverbrennungsmodus herangezogen werden kann. In diesem Fall kann ein herkömmliches Zündsystem (Zündkerzensystem) für die aktive Fremdentzündung des Verbrennungsgemisches außerhalb des Kompressionszündverbrennungsmodus entfallen.

Analog zur erfindungsgemäßen Verbrennungskraftmaschine zeichnet sich das erfindungsgemäße Verfahren zur Steuerung einer Verbrennungskraftmaschine während eines Kompressionszündverbrennungsmodus (wie oben beschrieben), bei dem mittels einer Triggereinheit die Selbstentzündung vor Erreichen der Selbstzündungsbedingungen ausgelöst werden kann, dadurch aus, dass die Triggereinheit als Corona-Zündsystem ausgebildet ist, und die Selbstentzündung während des Kompressionszündverbrennungsmodus insbesondere durch Erzeugen eines sogenannten nicht-thermischen Plasmas auslöst bzw. aktiviert.

Beim derzeitigen Stand der Technik wird im Kompressionszündverbrennungsmodus der Zeitpunkt der Selbstzündung in der Regel durch die gezielte Steuerung des Prozessablaufes (z.B. Variation der Gemischtemperatur und des Einspritzzeitpunktes, etc...) eingestellt. Aufgrund variierender Randbedingungen des Prozessablaufes ist dieser Zeitpunkt aber nicht genau einstellbar. Daher wird bei der erfindungsgemäßen Anwendung des Corona-Zündsystems das Verbrennungsgemisch lediglich in einen Zustand kurz vor der Selbstentzündungsschwelle überführt, so dass durch ein Antriggern mittels Corona-Zündsystem (insbesondere durch Erzeugen einer Corona-Entladung) die Verbrennung zu einem genauen Zeitpunkt eingeleitet werden kann. Die Coronaentladung zum punktgenauen Aktivieren der Selbstentzündung im Kompressionszündverbrennungsmodus kann dabei in Abhängigkeit vom gewünschten optimalen Zündzeitpunkt erzeugt werden. Für einen kontrollierten Brennverlauf können die Zündspannung und/oder der Zündzeitpunkt und/oder die Zünddauer des Corona-Zündsystems zum Antriggern bzw. zum Aktivieren der Selbstentzündung im Kompressionszündverbrennungsmodus variabel vorgegeben und die Zündspannung während der Corona-Entladung moduliert werden. So kann z.B. bei Bedarf eine gezielte Spätverschiebung des Umsatzbeginns in den Expansionstakt herbeigeführt werden.

Vorteilhafterweise kann das Corona-Zündsystem innerhalb eines Arbeitszyklus auch mehrfach zündbar sein, so dass zur Initiierung bzw. Kontrolle des Umsatzes bei Bedarf eine gezielte Mehrfachzündung vorgenommen werden kann.

In einer weiteren vorteilhaften Ausgestaltung der erfindungsgemäßen Verbrennungskraftmaschine und des erfindungsgemäßen Verfahrens kann das Corona-Zündsystem zusätzlich als Zündsystem zum Entzünden des Verbrennungsgemisches außerhalb des Kompressionszündverbrennungsmodus und/oder als Gemisch-Aufbereitungseinheit zur radikalchemischen Aufbereitung des Verbrennungsgemisches und/oder als Zündeinheit zum Entzünden des im Brennraum vorliegenden Verbrennungsgemisches während einer Zwischenkompressionsphase betreibbar sein. Der Einsatzbereich für eine radikalchemische Aufbereitung kann bspw. ab dem Zeitpunkt "Auslass schließt" des vorangegangenen Zyklus bis zum (Selbst-) Entzündungszeitpunkt des aktuellen Zyklus sein. Ein Betreiben des Corona-Zündsystems als Zündeinheit zum Entzünden des im Brennraum vorliegenden Verbrennungsgemisches während einer Zwischenkompressionsphase könnte bspw. während des Zeitraumes, bei dem eine negative Ventilüberscheidung vorliegt, erfolgen. Dieser Zeitraum liegt zwischen "Auslass schließt" und "Einlass öffnet". Während dieses Zeitraums kann somit zur Erweiterung des Betriebsbereiches der räumlichen Selbstentzündung Kraftstoff in das Restgas (mit Restsauerstoff) eingespritzt werden und anschließend das Gemisch mittels Corona-Entladung entzündet werden.

Das erfindungsgemäße Verfahren, sowie dessen vorteilhafte Ausgestaltungen können mittels eines implementierten Algorithmus oder einer entsprechenden Baugruppenanordnung in einem dafür vorgesehenen Steuergerät, insbesondere in einem Motorsteuergerät umgesetzt werden.

Die Erfindung wird nun anhand eines Ausführungsbeispiels näher erläutert.

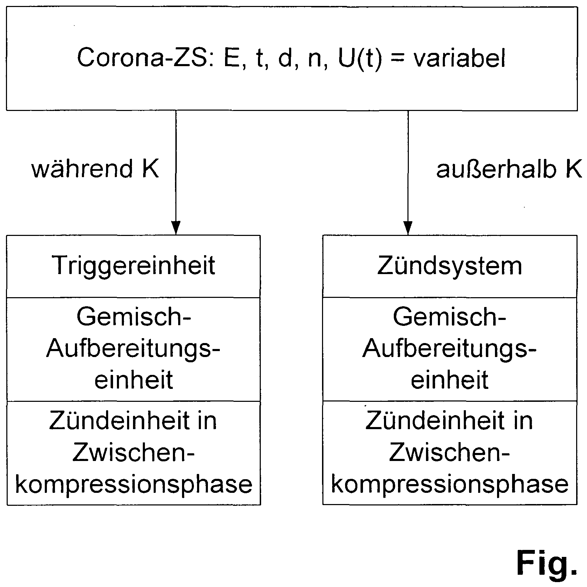

Dabei zeigt die einzige Figur die verschiedenen möglichen Einsatzgebiete eines Corona-Zündsystems bei einer Verbrennungskraftmaschine, die bei bestimmten Betriebsbedingungen in einem sog. Kompressionszündverbrennungsmodus im Rahmen eines sog. HCCI-Brennverfahrens (Homogenous Charge Compression Ignition) betrieben werden kann. Beim HCCI-Brennverfahren erfolgt - wie bereits eingangs erläutert - während des Kompressionszündverbrennungsmodus der Brennkraftmaschine die Zündung nicht - wie bei herkömmlichen Verfahren - punktförmig an der Zündkerze, sondern im gesamten Brennraum fast gleichzeitig durch eine Selbstentzündung des Verbrennungsgemisches. Die Verbrennung wird also nicht durch eine lokal begrenzte Zündquelle (z.B. Zündkerze) initiiert, sondern allein durch die Zündbedingungen im Brennraum bestimmt. Die dafür notwendigen Zündbedingungen werden z.B. durch die Rückführung von heißem Restgas sichergestellt. Außerhalb des Kompressionszündverbrennungsmodus wird das Verbrennungsgemisch nicht durch Selbstentflammung, sondern durch aktives (Fremd-)Entzünden mittels eines Zündsystems entflammt.

Gemäß der Erfindung ist die Verbrennungskraftmaschine mit einem Corona-Zündsystem (Corona-ZS) ausgestattet, welches z. B. im Brennraum zumindest eines Zylinders dort positioniert ist, wo bei herkömmlichen Verbrennungskraftmaschinen die Zündkerze positioniert ist. Dieses Corona-Zündsystem (Corona-ZS) kann erfindungsgemäß in verschiedenen Arten betrieben werden bzw. für verschiedene Aufgaben im Rahmen des Brennverfahrens eingesetzt werden. Bei dem Corona-Zündsystem (Corona-ZS) sind sowohl die Zündenergie E, als auch der Zündzeitpunkt t zumindest im Kompressionszündverbrennungsmodus variabel vorgebbar. Ebenso vorgebbar ist die Zünddauer d, Zündhäufigkeit n und ein optimierter Coronazündspannungsverlauf U(t) (z.B. zumindest innerhalb eines einzelnen Zündvorganges).

Solange sich die Verbrennungskraftmaschine aufgrund der vorliegenden Betriebsbedingungen außerhalb des Kompressionszündverbrennungsmodus K befindet, kann das Corona-Zündsystem (Corona-ZS) als Zündsystem zum aktiven (Fremd-)Entzünden des Verbrennungsgemisches durch Erzeugen eines sogenannten nicht-thermischen Plasmas verwendet werden. Befindet sich die Verbrennungskraftmaschine jedoch aufgrund der vorliegenden Betriebsbedingungen in einem Betriebszustand, bei dem eine Selbstentzündung des Verbrennungsgemisches möglich und sinnvoll erscheint, d. h. die Verbrennungskraftmaschine befindet sich in einem Kompressionszündverbrennungsmodus K, kann das Corona-Zündsystem (Corona-ZS) als Triggereinheit für die Selbstentflammung eingesetzt werden. Da eine zeitlich exakt kontrollierte Selbstentflammung ohne weitere Hilfsmittel nur sehr schwer erreichbar ist, kann das Corona-Zündsystem (Corona ZS) als Triggereinheit zum Auslösen bzw. Aktivieren der Selbstentzündung eingesetzt werden. Dadurch kann der tatsächliche Zündzeitpunkt auf den gewünschten optimalen Zündzeitpunkt genau abgestimmt werden. Um eine Aktivierung der Selbstentzündung mittels Corona-Zündsystem (Corona-ZS) ermöglichen zu können, muss das Verbrennungsgemisch zuvor in einen Zustand nahe, aber unterhalb der Selbstentzündungsschwelle gebracht werden, so dass eine Initialisierung der Selbstentflammung erreicht werden kann.

Zusätzlich kann das Corona-Zündsystem (Corona-ZS) auch als Gemisch-Aufbereitungseinheit in einem oder in beiden Betriebsmodi zur radikalchemischen Aufbereitung der Zylinderladung eingesetzt werden. Dies erfolgt idealerweise innerhalb des Zeitfensters zwischen Zeitpunkt "Auslass schließt" des vorangegangenen Zyklus und dem Zündzeitpunkt bzw. Selbstzündzeitpunkt im aktuellen Zyklus.

Zusätzlich oder alternativ kann das Corona-Zündsystem (Corona-ZS) in beiden Betriebsmodi auch als Zündeinheit zum Entzünden des im Brennraum vorliegenden Verbrennungsgemisches während einer Zwischenkompressionsphase eingesetzt werden. Dabei wird in der Zwischenkompressionsphase um den oberen Totpunkt beim Ladungswechsel (auch Ladungswechsel-OT genannt) innerhalb des Zeitfensters zwischen dem Zeitpunkt "Auslass schließt" und dem Zeitpunkt "Einlass öffnet" die Verbrennung dadurch ausgelöst, dass in das Restgas (inkl. Restsauerstoff) Kraftstoff eingespritzt wird und anschließend mittels Coronaentladung während der Zwischenkompression entzündet wird.

Die erfindungsgemäße Verbrennungskraftmaschine sowie das erfindungsgemäße Verfahren ermöglichen somit eine zeitlich exakt kontrollierte Selbstentzündung mittels eines Corona-Zündsystems. Hierdurch ergibt sich das Potenzial zur Verringerung der Anforderungen an die Brennraumüberwachung, da u. U. eine im Brennraum notwendige Drucksensorik zum Ermitteln und Einstellen des genauen Zündzeitpunktes entfallen kann. Zusätzlich kann der Verlauf der Strom-Spannungswerte des Corona-Zündsystems als Verbrennungslagediagnose eingesetzt werden. Durch den Einsatz des Corona-Zündsystems als Zündeinheit außerhalb des Kompressionszündverbrennungsmodus können die Kosten für ein herkömmliches Zündsystem eingespart werden. Weiter vereinfacht sich das funktionale Regelungskonzept des Brennverfahrens, da der Eingriff schwerpunktmäßig über Zeitpunkt, Energie, Dauer und Modulation der Coronaentladung vorgegeben wird. Schließlich können die Umschaltvorgänge zwischen den verschiedenen Betriebsarten durch gezielte Momentenansteuerung (z.B. über gezielte Einstellung eines früheren oder späteren Umsatzbeginns) wesentlich vereinfacht werden. Somit ist ein stabiler Motorbetrieb während der Umschaltvorgänge auch unter ungünstigen Randbedingungen möglich (z. B. hohe Restgasraten, mageres Gemisch).

## Patentansprüche

1. Verbrennungskraftmaschine, die zumindest bei bestimmten Betriebsbedingungen in einem Kompressionszündverbrennungsmodus betreibbar ist, bei dem das im Brennraum vorliegende Verbrennungsgemisch während des Prozessablaufes Selbstzündungsbedingungen erreicht und sich selbst entzündet, wobei die Brennkraftmaschine eine Triggereinheit zum Auslösen der Selbstentzündung während des Kompressionszündverbrennungsmodus vor Erreichen der Selbstzündungsbedingungen umfasst, **dadurch gekennzeichnet, dass** die Triggereinheit als Corona-Zündsystem (Corona-ZS) ausgebildet und als Triggereinheit zum Auslösen der Selbstentzündung während des Kompressionszündverbrennungsmodus (K) derart durch Erzeugen eines nicht-thermischen Plasmas betreibbar ist, dass durch die erzeugte Corona-Entladung eine zeitlich gezielte Initialisierung der räumlichen Selbstentzündung stattfindet, indem sich entlang der Coronafäden Radikale bilden, wodurch eine sehr schnelle Entflammung entlang der Coronafäden initialisiert und somit die Selbstentzündung in den restlichen Bereichen des Brennraums ausgelöst wird.

2. Verbrennungskraftmaschine nach Anspruch 1, wobei die Brennkraftmaschine zusätzlich ein Zündsystem zur Entzündung des Verbrennungsgemisches außerhalb des Kompressionszündverbrennungsmodus umfasst, **dadurch gekennzeichnet, dass** das Corona-Zündsystem (Corona-ZS) zusätzlich als Zündsystem zum Entzünden des Verbrennungsgemisches außerhalb des Kompressionszündverbrennungsmodus (K) betreibbar ist.

3. Verbrennungskraftmaschine nach Anspruch 1 oder 2, **dadurch gekennzeichnet, dass** während des Kompressionszündverbrennungsmodus (K) das im Brennraum vorliegende und sich in einem Zustand nahe einer Selbstzündungsschwelle befindliche Verbrennungsgemisch mittels einer durch das Corona-Zündsystem (Corona-ZS) erzeugten Coronaentladung zur Selbstentzündung gebracht wird.

4. Verbrennungskraftmaschine nach Anspruch 3, **dadurch gekennzeichnet, dass** die Coronaentladung zum Auslösen der Selbstentzündung im Kompressionszündverbrennungsmodus (K) in Abhängigkeit vom gewünschten optimalen Zündzeitpunkt erzeugbar ist.

5. Verbrennungskraftmaschine nach einem der vorangegangenen Ansprüche, **dadurch gekennzeichnet, dass** die Zündenergie (E) und/oder der Zündzeitpunkt (t) und/oder die Zünddauer (d) und/oder die Modulation des Spannungsverlaufes (U(t)) des Corona-Zündsystems (Corona-ZS) zum Auslösen der Selbstentzündung innerhalb des Kompressionszündverbrennungsmodus (K) und/oder außerhalb des Kompressionszündverbrennungsmodus (K) variabel vorgebbar sind.

6. Verbrennungskraftmaschine nach einem der vorangegangenen Ansprüche, **dadurch gekennzeichnet, dass** das Corona-Zündsystem (Corona-ZS) innerhalb eines Arbeitszyklus mehrfach zündbar ist.

7. Verbrennungskraftmaschine nach einem der vorangegangenen Ansprüche, **dadurch gekennzeichnet, dass** das Corona-Zündsystem (Corona-ZS) zusätzlich als Gemisch-Aufbereitungseinheit zur radikalchemischen Aufbereitung des Verbrennungsgemisches betreibbar ist.

8. Verbrennungskraftmaschine nach einem der vorangegangenen Ansprüche, **dadurch gekennzeichnet, dass** das das Corona-Zündsystem (Corona-ZS) zusätzlich als Zündeinheit zum Entzünden des im Brennraum vorliegenden Gemisches während einer Zwischenkompressionsphase betreibbar ist.

9. Verfahren zur Steuerung einer Verbrennungskraftmaschine während eines Kompressionszündverbrennungsmodus, bei dem das im Brennraum vorliegende Verbrennungsgemisch während des Prozessablaufes Selbstzündungsbedingungen erreicht und sich selbst entzündet, wobei mittels einer Triggereinheit die Selbstentzündung vor Erreichen der Selbstzündungsbedingungen ausgelöst wird, **dadurch gekennzeichnet, dass** die Triggereinheit als Corona-Zündsystem (Corona-ZS) ausgebildet ist, das die Selbstentzündung während des Kompressionszündverbrennungsmodus (K) durch Erzeugen eines nicht-thermischen Plasmas auslöst und durch die erzeugte Corona-Entladung eine zeitlich gezielte Initialisierung der räumlichen Selbstentzündung stattfindet, indem sich entlang der Coronafäden Radikale bilden, wodurch eine sehr schnelle Entflammung entlang der Coronafäden initialisiert und somit die Selbstentzündung in den restlichen Bereichen des Brennraums ausgelöst wird.

10. Verfahren nach Anspruch 9, **dadurch gekennzeichnet, dass** zum Auslösen der Selbstentzündung während des Kompressionszündverbrennungsmodus (K) das im Brennraum vorliegende Verbrennungsgemisch in einen Zustand nahe einer Selbstzündungsschwelle gebracht wird und anschließend mittels einer durch das Corona-Zündsystem (Corona-ZS) erzeugten Coronaentladung die Selbstentzündung ausgelöst wird.

11. Verfahren nach Anspruch 10, **dadurch gekennzeichnet, dass** die Coronaentladung zum Auslösen der Selbstentzündung im Kompressionszündverbrennungsmodus (K) in Abhängigkeit vom gewünschten optimalen Zündzeitpunkt erzeugt wird.

12. Verfahren nach einem der Ansprüche 9 - 11, **dadurch gekennzeichnet, dass** die Zündenergie (E) und/oder der Zündzeitpunkt (t) und/oder die Zünddauer (d) und/oder die Modulation des Spannungsverlaufes (U(t)) des Corona-Zündsystems (Corona-ZS) zum Auslösen der Selbstentzündung im Kompressionszündverbrennungsmodus (K) variabel vorgegeben werden.

13. Verfahren nach einem der Ansprüche 9 - 12, **dadurch gekennzeichnet, dass** innerhalb eines Arbeitszyklus mehrere Coronaenladungen eingeleitet werden können.

14. Verfahren nach einem der Ansprüche 9 -13, **dadurch gekennzeichnet, dass** das Corona-Zündsystem (Corona-ZS) zusätzlich als Zündsystem zum Entzünden des Verbrennungsgemisches außerhalb des Kompressionszündverbrennungsmodus (K) und/oder als Gemisch-Aufbereitungseinheit zur radikalchemischen Aufbereitung des Verbrennungsgemisches betrieben wird.

15. Verfahren nach einem der Ansprüche 9 - 14, **dadurch gekennzeichnet, dass** das Corona-Zündsystem (Corona-ZS) zusätzlich als Zündeinheit zum Entzünden des im Brennraum vorliegenden Gemisches während einer Zwischenkompressionsphase betrieben wird.

## Claims

1. An internal combustion engine which is operable in a compression ignition mode at least under certain operating conditions, in which mode the combustion mixture, present in the combustion chamber, reaches auto-ignition conditions during the course of the process and auto-ignites, wherein the internal combustion engine comprises a trigger unit for triggering the auto-ignition during the compression ignition mode before reaching the auto-ignition conditions, **characterised in that** the trigger unit is configured as a corona ignition system (corona ZS) and is operable as a trigger unit for triggering the auto-ignition during the compression ignition mode (K) by generating a non-thermal plasma such that a time-specific initialisation of the spatial auto-ignition takes place due to the generated corona discharge, **in that** radicals form along the corona threads, as a result of which a very rapid ignition is initialised along the coronal threads and the auto-ignition is thereby triggered in the remaining regions of the combustion chamber.

2. An internal combustion engine according to claim 1, wherein the internal combustion engine also comprises an ignition system for igniting the combustion mixture outside the compression ignition mode, **characterised in that** the corona ignition system (corona ZS) is also operable as an ignition system for igniting the combustion mixture outside the compression ignition mode (K).

3. An internal combustion engine according to claim 1 or claim 2, **characterised in that** during the compression ignition mode (K), the combustion mixture, present in the combustion chamber and in a state close to an auto-ignite threshold is brought to auto-ignition by a coronal discharge, generated by the corona ignition system (corona ZS).

4. An internal combustion engine according to claim 3, **characterised in that** the corona discharge to trigger auto-ignition in the compression ignition mode (K) can be generated subject to the desired optimum ignition point in time.

5. An internal combustion engine according to any one of the preceding claims, **characterised in that** the ignition energy (E) and/or the ignition point in time (t) and/or the ignition duration (d) and/or the modulation of the voltage course (U(t)) of the corona ignition system (corona ZS) can be predefined in a variable manner to trigger the auto-ignition in the compression ignition mode (K) and/or outside the compression ignition mode (K).

6. An internal combustion engine according to any one of the preceding claims, **characterised in that** the corona ignition system (corona ZS) can be ignited many times within one working cycle.

7. An internal combustion engine according to any one of the preceding claims, **characterised in that** the corona ignition system (corona ZS) is also operable as a mixture processing unit for the radical-chemical processing of the combustion mixture.

8. An internal combustion engine according to any one of the preceding claims, **characterised in that** the corona ignition system (corona ZS) is also operable as an ignition unit for igniting the mixture, present in the combustion chamber, during an intermediate compression phase.

9. A method for controlling an internal combustion engine during a compression ignition mode in which the combustion mixture, present in the combustion chamber, reaches auto-ignition conditions during the course of the process and auto-ignites, wherein auto-ignition is triggered by a trigger unit before the auto-ignition conditions are reached, **characterised in that** the trigger unit is configured as a corona ignition system (corona ZS) which triggers the auto-ignition during the compression ignition mode (K) by generating a non-thermal plasma, and a time-specific initialisation of the spatial auto-ignition takes place due to the generated corona discharge, **in that** radicals form along the corona threads, as a result of which a very rapid ignition is initialised along the coronal threads and the auto-ignition is thereby triggered in the remaining regions of the combustion chamber.

10. A method according to claim 9, **characterised in that** in order to trigger the auto-ignition during the compression ignition mode (K), the combustion mixture, present in the combustion chamber, is brought into a state close to an auto-ignition threshold and the auto-ignition is then triggered by a corona discharge generated by the corona ignition system (corona ZS).

11. A method according to claim 10, **characterised in that** in order to trigger the auto-ignition in the compression ignition mode (K), the corona discharge is generated subject to the desired optimum ignition point in time.

12. A method according to any one of claims 9 to 11, **characterised in that** the ignition energy (E) and/or the ignition point in time (t) and/or the ignition duration (d) and/or the modulation of the voltage course (U(t)) of the corona ignition system (corona ZS) are predefined in a variable manner for triggering the auto-ignition in the compression ignition mode (K).

13. A method according to any one of claims 9 to 12, **characterised in that** a plurality of corona discharges can be initiated within one working cycle.

14. A method according to any one of claims 9 to 13, **characterised in that** the corona ignition system (corona ZS) is also operated as an ignition system for igniting the combustion mixture outside the compression ignition mode (K) and/or as a mixture processing unit for the radical-chemical processing of the combustion mixture.

15. A method according to any one of claims 9 to 14, **characterised in that** the corona ignition system (corona ZS) is also operated as an ignition unit for igniting the mixture, present in the combustion chamber, during an intermediate compression phase.

## Revendications

1. Moteur à combustion interne pouvant être actionné, au moins dans des conditions de fonctionnement déterminées selon un mode de combustion à allumage par compression dans lequel le mélange de combustion présent dans la chambre de combustion atteint des conditions d'autoallumage pendant le déroulement du processus et s'enflamme automatiquement, le moteur à combustion interne comprenant une unité de déclenchement permettant de déclencher l'autoallumage pendant le mode de combustion par allumage par compression avant d'avoir atteint les conditions d'autoallumage,
**caractérisé en ce que**
l'unité de déclenchement est réalisée sous la forme d'un système d'allumage par effet Corona (Corona ZS), et peut être actionnée en tant qu'unité de déclenchement permettant de déclencher l'autoallumage, pendant le mode de combustion à allumage par compression (K), par génération d'un plasma non thermique, de sorte que, la décharge Corona obtenue, entraîne une initialisation de l'autoallumage spatial, chronologiquement ciblée du fait de la formation de radicaux le long des filaments Corona, entraînant une inflammation très rapide le long des filaments Corona et ainsi le déclenchement de l'autoallumage dans les zones restantes de la chambre de combustion.

2. Moteur à combustion interne conforme à la revendication 1,
dans lequel le moteur comporte en outre un système d'allumage permettant l'inflammation du mélange de combustion en dehors du mode de combustion à allumage par compression,
**caractérisé en ce que**
le système d'allumage par effet Corona (Corona ZS) peut en outre être actionné en tant que système d'allumage pour permettre l'inflammation du mélange de combustion en dehors du mode de combustion à allumage par compression (K).

3. Moteur à combustion interne conforme à la revendication 1 ou 2,
**caractérisé en ce que**
pendant le mode de combustion à allumage par compression (K), le mélange de combustion présent dans la chambre de combustion et se trouvant dans un état proche du seuil d'autoallumage est amené à l'autoallumage par une décharge Corona produite par le système d'allumage par effet Corona (Corona-ZS).

4. Moteur à combustion interne conforme à la revendication 3,
**caractérisé en ce que**
la décharge Corona peut être produite pour déclencher l'autoallumage dans le mode de combustion à allumage par compression (K) en fonction de l'instant d'allumage optimum souhaité.

5. Moteur à combustion interne conforme à l'une des revendications précédentes,
**caractérisé en ce que**
l'énergie d'allumage (E) et/ou l'instant d'allumage (t) et/ou la durée d'allumage (d) et/ou la modulation des variations de tension (U(t)) du système d'allumage par effet Corona (Corona ZS) peu(ven)t être prédéfini(es) de façon variable pour déclencher l'autoallumage dans le mode de combustion à allumage par compression (K) et/ou en dehors du mode de combustion à allumage par compression (K).

6. Moteur à combustion interne conforme à l'une des revendications précédentes,
**caractérisé en ce que**
le système d'allumage par effet Corona (Corona ZS) peut être allumé plusieurs fois pendant un cycle de travail.

7. Moteur à combustion interne conforme à l'une des revendications précédentes,
**caractérisé en ce que**
le système d'allumage par effet Corona (Corona ZS) peut en outre être actionné en tant qu'unité de préparation d'un mélange pour préparer le mélange de combustion par chimie radicalaire.

8. Moteur à combustion interne conforme à l'une des revendications précédentes,
**caractérisé en ce que**
le système d'allumage par effet Corona (Corona ZS) peut en outre être actionné en tant qu'unité d'allumage pour permettre d'enflammer le mélange présent dans la chambre de combustion pendant une phase de compression intermédiaire.

9. Procédé de commande d'un moteur à combustion interne pendant un mode de combustion à allumage par compression,
selon lequel le mélange de combustion présent dans la chambre de combustion atteint des conditions d'autoallumage pendant le déroulement du processus et s'enflamme automatiquement, et, l'autoallumage est déclenché avant d'avoir atteint les conditions d'autoallumage, au moyen d'une unité de déclenchement,
**caractérisé en ce que**
l'unité de déclenchement est réalisée sous la forme d'un système d'allumage par effet Corona (Corona ZS) qui déclenche l'autoallumage pendant le mode de combustion à allumage par compression (K) par génération d'un plasma non thermique, et, la décharge Corona obtenue entraîne une initialisation de l'autoallumage spatial chronologiquement, ciblée du fait que des radicaux se forment le long des filaments Corona, de façon à initialiser une inflammation très rapide le long des filaments Corona, et ainsi à déclencher l'autoallumage dans la zone restante de la chambre de combustion.

10. Procédé conforme à la revendication 9,
**caractérisé en ce que**
pour déclencher l'autoallumage pendant le mode de combustion à allumage par compression (K), le mélange de combustion présent dans la chambre de combustion est amené dans un état proche du seuil d'autoallumage, puis l'autoallumage est déclenché par une décharge Corona produite par le système d'allumage par effet Corona (Corona ZS).

11. Procédé conforme à la revendication 10,
**caractérisé en ce que**
la décharge Corona est produite pour déclencher l'autoallumage dans le mode de combustion à allumage par compression (K) en fonction de l'instant d'allumage optimum souhaité.

12. Procédé conforme à l'une des revendications 9 à 11,
**caractérisé en ce que**
l'énergie d'allumage (E) et/ou l'instant d'allumage (t) et/ou la durée d'allumage (d) et/ou la modulation des variations de tension (U(t)) du système d'allumage par effet Corona (Corona ZS) est(sont) prédéfini(es) de façon variable pour permettre de déclencher l'autoallumage dans le mode de combustion à allumage par compression (K).

13. Procédé conforme à l'une des revendications 9 à 12,
**caractérisé en ce que**
plusieurs décharges Corona peuvent être provoquées pendant un cycle de travail.

14. Procédé conforme à l'une des revendications 9 à 13,
**caractérisé en ce que**
le système d'allumage par effet Corona (Corona ZS) peut en outre être actionné en tant que système d'allumage pour permettre d'enflammer le mélange de combustion en dehors du mode de combustion à allumage par compression (K) et/ou en tant qu'unité de préparation de mélange pour préparer le mélange de combustion par chimie radicalaire.

15. Procédé conforme à l'une des revendications 9 à 14,
**caractérisé en ce que**
le système d'allumage par effet Corona (Corona ZS) est en outre actionné en tant qu'unité d'allumage pour permettre l'inflammation du mélange présent dans la chambre de combustion pendant une phase de compression intermédiaire.
